# EUROPEAN PATENT APPLICATION

(11) **EP 4 672 302 A1**
(43) Date of publication of application: **31.12.2025**
(21) Application number: 25184216.7
(22) Date of filing: 20.06.2025
(51) Int. Cl.: H01J 49/00, G01N 27/623

(54) **HYBRIDIZED ION PRE-SEPARATION FOR MASS SPECTROMETRY**

(30) Priority: 27.06.2024 US 202418755999
(71) Applicant: THERMO FINNIGAN LLC, San Jose CA 95134 (US)
(72) Inventor: UGAROV, Mikhail V., San Jose (US)
(74) Representative: Tombling, Adrian George

(57) **Abstract**

A system includes a first pre-separation device configured to perform a first pre-separation of precursor ions according to mobilities of the precursor ions and a second pre-separation device positioned downstream of the first pre-separation device configured to perform a second pre-separation of precursor ions based on a mass-to-charge ratio (m/z) of the precursor ions. The system further includes a mass spectrometer positioned downstream of the second pre-separation device configured to acquire mass spectra for precursor ions emitted from the second pre-separation device. The second pre-separation device is synchronized with the mass spectrometer such that an m/z range of precursor ions emitted from the second pre-separation device corresponds to a precursor m/z isolation window of the mass spectrometer.

## Description

### BACKGROUND INFORMATION

A mass spectrometer is an instrument that may be used to detect, identify, and/or quantify molecules based on the mass-to-charge ratio (m/z) of ions produced from the molecules. A mass spectrometer generally includes an ion source for producing ions from molecules included in a sample, a mass analyzer for separating the ions based on their m/z, and an ion detector for detecting the separated ions. The mass spectrometer may include or be connected to a computer-based software platform that uses data from the ion detector to construct a mass spectrum that shows a relative abundance of each of the detected ions as a function of m/z. The mass spectrum may be used to detect and quantify molecules in simple and complex mixtures.

In some mass spectrometry experiments, such as multi-stage mass spectrometry (MSn where n is 2 or more) or tandem mass spectrometry (a form of multi-stage mass spectrometry where n is 2, often denoted MS/MS or MS2), certain ions are isolated and then fragmented in a controlled manner to yield product ions. A mass analysis is then performed on the product ions to generate mass spectra of the product ions. The mass spectra of the product ions provide information that may be used to confirm identification, determine quantity, and/or derive structural details regarding analytes of interest.

Various techniques may be used to acquire mass spectra using multi-stage mass spectrometry. One commonly used technique is data-dependent acquisition (DDA), which uses data acquired in one mass analysis to select, based on predetermined criteria, one or more ion species or a narrow m/z range for isolation and fragmentation of the selected ion species and subsequent mass analysis of the fragment ions (product ions). For example, a mass spectrometer may perform a full MS survey scan of precursor ions over a wide precursor m/z range and then select one or more precursor ion species from the resulting spectra for subsequent MS/MS or MSn analysis. The criteria for selection of precursor ion species may include intensity, charge state, m/z, inclusion/exclusion lists, or isotopic patterns.

In contrast to DDA, data-independent acquisition (DIA) is a technique in which all precursor ion species within a wide precursor m/z range (e.g., 500 - 900 m/z) are isolated and fragmented via a sequentially advancing isolation window of a fixed m/z width (e.g., 10 m/z, 20 m/z, etc.) to generate product ions. An MS/MS or MSn analysis is then performed on the product ions in a methodical and unbiased manner. The acquisition of the set of mass spectra spanning the full precursor m/z range constitutes one acquisition cycle, which is repeated to generate MS/MS or MSn mass spectra of the product ions. In the DIA technique, isolation and fragmentation of one or more precursor ion species is not dependent on data acquired in a survey mass analysis, as in DDA.

However, due to limitations in instrument speed and sensitivity, there is tension among the isolation width and the precursor m/z range. Generally, wider isolation widths enable a wider precursor m/z range and thus analysis of a greater number of precursor ion species but produce lower quality data because a wide isolation window may result in co-isolation and co-fragmentation of neighboring analytes, resulting in complex, unidentifiable, or low scoring spectra. On the other hand, narrower isolation windows produce better quality data with greater sensitivity at the expense of fewer precursor ion species that may be analyzed due to the narrower precursor m/z range. For example, at the extreme of very narrow isolation widths, the data have the highest quality in terms of sensitivity and selectivity, but the smallest range of precursor ion species are analyzed. Such narrow isolation widths may decrease the duty cycle for the MS analysis by filtering out a large number of precursor ions outside of the narrow isolation widths. To illustrate, the duty cycle for the MS analysis may refer to an amount (e.g., a ratio, a percentage, a number, etc.) of precursor ions produced by the ion source that are effectively analyzed during the MS analysis. Due to filtering out a large number of precursor ions during MS analyses with narrow isolation widths, a lower number of precursor ions are analyzed such that the duty cycle is decreased.

### SUMMARY

The following description presents a simplified summary of one or more aspects of the methods and systems described herein to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some illustrative examples, a system comprises: a first pre-separation device configured to spatially separate precursor ions into a plurality of subsets of precursor ions according to mobilities of the precursor ions and sequentially emit the plurality of subsets of precursor ions from the first pre-separation device; a second pre-separation device positioned downstream of the first pre-separation device, the second pre-separation device configured to receive the plurality of subsets of precursor ions emitted from the first pre-separation device and, for each subset of precursor ions, sequentially emit a plurality of packets of precursor ions from the second pre-separation device based on a mass-to-charge ratio (m/z) of the precursor ions; and a mass spectrometer positioned downstream of the second pre-separation device and configured to receive the plurality of packets of precursor ions from the second pre-separation device and acquire mass spectra for the plurality of packets of precursor ions; wherein the second pre-separation device is synchronized with the mass spectrometer such that an m/z range of the precursor ions included in each packet of precursor ions emitted from the second pre-separation device corresponds to a precursor m/z isolation window of the mass spectrometer.

In some illustrative examples, a system comprises: a first pre-separation device configured to spatially separate precursor ions into a plurality of subsets of precursor ions according to mobilities of the precursor ions and sequentially emit the plurality of subsets of precursor ions from the first pre-separation device; a second pre-separation device positioned downstream of the first pre-separation device, the second pre-separation device configured to receive the plurality of subsets of precursor ions emitted from the first pre-separation device and, for each subset of precursor ions, sequentially emit a plurality of packets of precursor ions from the second pre-separation device based on a mass-to-charge ratio (m/z) of the precursor ions; and a mass spectrometer positioned downstream of the second pre-separation device and configured to receive the plurality of packets of precursor ions from the second pre-separation device and acquire mass spectra for the plurality of packets of precursor ions, the mass spectrometer comprising a mass filter synchronized with the second pre-separation device such that an m/z range of the precursor ions included in each packet of precursor ions emitted from the second pre-separation device corresponds to a precursor m/z isolation window of the mass filter.

In some illustrative examples, a system comprises: one or more processors; and memory storing executable instructions that, when executed by the one or more processors, cause a computing device to: direct a first pre-separation device to spatially separate precursor ions into a plurality of subsets of precursor ions according to mobilities of the precursor ions; direct the first pre-separation device to sequentially emit the plurality of subsets of precursor ions to a second pre-separation device; direct the second pre-separation device to sequentially emit, for each subset of precursor ions, a plurality of packets of precursor ions to a mass spectrometer based on a mass-to-charge ratio (m/z) of the precursor ions; and direct the mass spectrometer to acquire mass spectra for the plurality of packets of precursor ions; wherein the second pre-separation device is synchronized with the mass spectrometer such that an m/z range of the precursor ions included in each packet of precursor ions emitted from the second pre-separation device corresponds to a precursor m/z isolation window of the mass spectrometer.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a functional diagram of an illustrative hybridized ion pre-separation MS/MS system.
FIG. 2 shows a functional diagram of an illustrative ion pre-separation control module.
FIG. 3 shows an illustrative method of performing a hybridized ion pre-separation for mass spectrometry.
FIG. 4 shows an illustrative implementation of the method of FIG. 3.
FIGS. 5 and 6 show illustrative schematics of timing schemes for performing the method of FIG. 3.
FIG. 7 shows another illustrative implementation of the method of FIG. 3.
FIG. 8 shows an illustrative computing device that may be specifically configured to perform one or more of the processes described herein.

### DETAILED DESCRIPTION

Systems, apparatuses, and methods of performing hybridized ion pre-separation for mass spectrometry are described herein. For example, a mass spectrometry system may include a first pre-separation device configured to spatially separate precursor ions into a plurality of subsets of precursor ions according to mobilities of the precursor ions and to sequentially emit the plurality of subsets of precursor ions to a second pre-separation device. The second pre-separation device is configured to sequentially emit, for each subset of precursor ions, a plurality of packets of precursor ions to a mass spectrometer based on a mass-to-charge ratio (m/z) of the precursor ions such that the mass spectrometer may acquire mass spectra for the plurality of packets of precursor ions. The second pre-separation device may be synchronized with the mass spectrometer such that an m/z range of the precursor ions included in each packet of precursor ions emitted from the second pre-separation device corresponds to a precursor m/z isolation window of the mass spectrometer.

The systems, apparatuses, and methods described herein improve the duty cycle for MS analysis, as compared with traditional MS analysis techniques, by pre-separating precursor ions based on both precursor ion mobility and m/z of the precursor ions prior to performing an MS analysis of the precursor ions. For example, pre-separating the precursor ions into subsets of precursor ions according to mobility preserves the precursor ions while the precursor ions are waiting to be transferred to the mass spectrometer for MS analysis within a particular precursor m/z isolation window of the mass spectrometer. However, mobility separation may not directly correspond to m/z of the precursor ions, so that the identity (e.g., m/z) of the precursor ions included in each subset of precursor ions may be unknown. Accordingly, the subsets of precursor ions are further pre-separated according to m/z of the precursor ions. This second pre-separation further allows the mass spectrometer to have a smaller precursor m/z isolation window and increased sensitivity, as compared to an MS analysis technique that pre-separates precursor ions based solely on mobility. Moreover, the first pre-separation based on mobility may decrease the charge loads needed for the m/z-based separation, provide a separation of charged states of interfering ions, and increase the efficiency of the m/z-based separation, as compared to MS analysis techniques that separate precursor ions based solely on m/z. Accordingly, the combination of the mobility-based and m/z-based pre-separation improves the duty cycle of the MS analysis, as compared with traditional MS analysis techniques.

Various embodiments will now be described in more detail with reference to the figures. The systems and methods described herein may provide one or more of the benefits mentioned above and/or various additional and/or alternative benefits that will be made apparent herein.

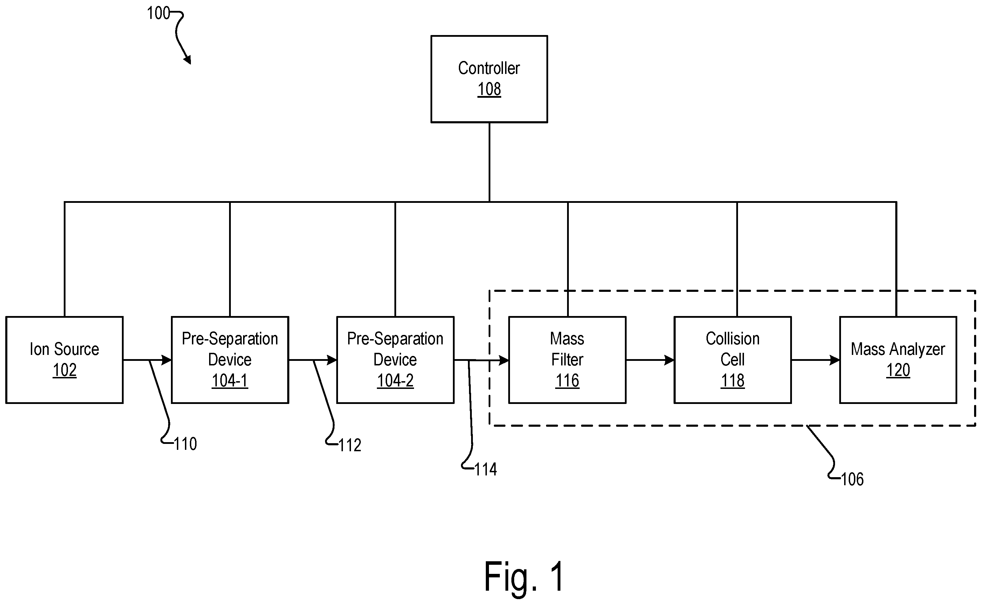

FIG. 1 shows a functional diagram of an illustrative hybridized ion pre-separation MS/MS system 100 ("system 100"). System 100 includes an ion source 102, a first pre-separation device 104-1, a second pre-separation device 104-2, a mass spectrometer 106, and a controller 108. Mass spectrometer 106 may be implemented by a multi-stage mass spectrometer configured to perform multi-stage mass spectrometry (also denoted MSn). In some examples, as shown in FIG. 1, mass spectrometer 106 is a tandem mass spectrometer configured to perform tandem mass spectrometry. Tandem mass spectrometry (MS/MS) is a form of multi-stage mass spectrometry (MSn) where the number of stages (n) is 2. As used herein, multi-stage mass spectrometry refers to MS/MS as well as MSn mass spectrometry where n is greater than two.

Ion source 102 is configured to produce a stream 110 of precursor ions from components included in a sample and deliver the precursor ions to first pre-separation device 104-1. Ion source 102 may use any suitable ionization technique, including without limitation electron ionization, chemical ionization, matrix assisted laser desorption/ionization, electrospray ionization, atmospheric pressure chemical ionization, atmospheric pressure photoionization, inductively coupled plasma, and the like. Ion source 102 may include various components for producing precursor ions from components included in a sample and delivering stream 110 of precursor ions to first pre-separation device 104-1.

First pre-separation device 104-1 is configured to spatially separate the precursor ions received from ion source 102 into a plurality of subsets 112 of precursor ions according to mobilities of the precursor ions and sequentially emit the plurality of subsets 112 of precursor ions. First pre-separation device 104-1 may use any suitable mobility separation technique, including without limitation trapped ion mobility separation (TIMS), drift ion mobility separation (e.g., including a drift tube and/or a structure for lossless ion manipulation (SLIM) enabled folded path separation), differential mobility separation (DMA), and the like. First pre-separation device 104-1 may include various components for separating precursor ions (e.g., from stream 110 of precursor ions) into plurality of subsets 112 of precursor ions based on mobilities of the precursor ions and sequentially emitting the plurality of subsets 112 of precursor ions from first pre-separation device 104-1 (e.g., each subset 112 of precursor ions are emitted one after another from first pre-separation device 104-1).

Second pre-separation device 104-2 is positioned downstream of first pre-separation device 104-1 and is configured to receive the plurality of subsets 112 of precursor ions emitted from first pre-separation device 104-1 and, for each subset 112 of precursor ions, sequentially emit a plurality of packets 114 of precursor ions based on an m/z of the precursor ions. Second pre-separation device 104-2 may use any suitable m/z separation technique, including without limitation a mass filter, an ion accumulator, ion sorter, annular ion trap, linear ion trap, and the like. The m/z separation can be based on different principles that provide mass-dependent displacement of ions such as RF-field induced pseudopotential, traveling waves of various types, resonance activation, and others. Second pre-separation device 104-2 may include various components for separating subsets 112 of precursor ions (e.g., from first pre-separation device 104-1) into a plurality of packets 114 of precursor ions based on m/z of the precursor ions and sequentially emitting the plurality of packets 114 of precursor ions from second pre-separation device 104-2. Accordingly, second pre-separation device 104-2 is configured to multiplex precursor ions by either storing multiple packets 114 of precursor ions and/or sequentially releasing multiple packets 114 of precursor ions without significant loss of unreleased packets 114 such that second pre-separation device 104-2 spatially separates each subset 112 of precursor ions into a plurality of packets 114 of precursor ions based on m/z of the precursor ions. While the illustrated example shows two pre-separation devices 104, system 100 may include any suitable number of two or more pre-separation devices 104 that are each configured to spatially separate pre-cursor ions.

Mass spectrometer 106 is positioned downstream of second pre-separation device 104-2 and is configured to receive the plurality of packets 114 of precursor ions from second pre-separation device 104-2 and acquire mass spectra for the plurality of packets 114 of precursor ions (e.g., a mass spectrum is acquired for each packet 114 of precursor ions). As shown, mass spectrometer 106 is tandem-in-space (e.g., has multiple mass filters and/or mass analyzers) and has two stages for performing MS/MS. However, mass spectrometer 106 is not limited to this configuration but may have any other suitable configuration. For example, mass spectrometer 106 may be tandem-in-time. Additionally or alternatively, mass spectrometer 106 may be a multi-stage mass spectrometer with three or more stages for performing multi-stage mass spectrometry (e.g., MS/MS/MS).

In the illustrated example, mass spectrometer 106 includes a mass filter 116, a collision cell 118, and a mass analyzer 120. Mass spectrometer 106 may further include any additional or alternative components not shown as may suit a particular implementation (e.g., ion optics, filters, lenses, ion stores, an autosampler, a detector, etc.). While ion source 102, first pre-separation device 104-1, and second pre-separation device 104-2 are shown to be separate from, or outside of, mass spectrometer 106, in other examples ion source 102, first pre-separation device 104-1, and/or second pre-separation device 104-2 are included in mass spectrometer 106.

Mass filter 116 is configured to isolate or separate precursor ions within each packet 114 of precursor ions according to m/z of each of the precursor ions. Mass filter 116 may be implemented by any suitable mass filter, such as a quadrupole mass filter, an ion trap (e.g., a three-dimensional quadrupole ion trap, a cylindrical ion trap, a linear quadrupole ion trap, a toroidal ion trap, etc.), and the like. Mass filter 116 is configured to receive the plurality of packets 114 of precursor ions from second pre-separation device 104-2 and, for each packet 114 of precursor ions, isolate precursor ions of a selected m/z range (e.g., an m/z range of an isolation window) and deliver a beam of precursor ions to collision cell 118. In some examples, mass filter 116 is omitted from mass spectrometer 106. For example, the plurality of packets 114 of precursor ions may be transferred from second pre-separation device 104-2 directly (e.g., without passing through a mass filter) to collision cell 118 or mass analyzer 120.

Collision cell 118 is configured to receive the beam of precursor ions for each packet 114 of precursor ions and produce product ions (e.g., fragment ions) via controlled dissociation processes. Collision cell 118 may be implemented by any suitable collision cell. As used herein, "collision cell" may encompass any structure or device configured to produce product ions via controlled dissociation processes and is not limited to devices employed for collisionally-activated dissociation. For example, collision cell 118 may be configured to fragment precursor ions using collision induced dissociation (CID), electron transfer dissociation (ETD), electron capture dissociation (ECD), photo induced dissociation (PID) (e.g., infrared multiphoton dissociation (IRMPD), blackbody infrared radiative dissociation (BIRD)), surface induced dissociation (SID), negative electron-transfer dissociation (NETD), electron-detachment dissociation (EDD), higher-energy C-trap dissociation (HCD), charge remote fragmentation, ion/molecule reactions, and the like. Collision cell 118 directs a beam of product ions to mass analyzer 120.

Mass analyzer 120 is configured to filter and/or perform a mass analysis of the product ions. For example, mass analyzer 120 is configured to isolate or separate ions according to m/z of each of the ions. Mass analyzer 120 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap mass analyzer, a Kingdon trap, etc.), a Fourier transform ion cyclotron resonance (FT-ICR) mass analyzer, and the like.

An ion detector (not shown) is configured to detect ions at each of a variety of different m/z and responsively generate an electrical signal representative of ion intensity. The electrical signal is transmitted to controller 108 for processing, such as to construct a mass spectrum of the sample. For example, mass analyzer 120 may emit an emission beam of separated ions to the ion detector, which is configured to detect the ions in the emission beam and generate or provide data that can be used by controller 108 to construct a mass spectrum of the sample. The ion detector may be implemented by any suitable detection device, including without limitation an electron multiplier, a Faraday cup, and the like. In some examples, the detector is included in or implemented by mass analyzer 120.

Second pre-separation device 104-2 is synchronized with mass spectrometer 106 such that an m/z range of the precursor ions included in each packet 114 of precursor ions emitted from second pre-separation device 104-2 corresponds to a precursor m/z isolation window of mass spectrometer 106 (e.g., mass filter 116). For example, the synchronization can be achieved using the controller 108 as described in more detail below. As used herein, the term "m/z isolation window" refers to a width of the range of precursor ion masses that are isolated for each MS2 acquisition. Multiple MS2 acquisitions may be performed at multiple m/z isolation windows (e.g., 1-50 m/z, 10-30 m/z, 10-20 m/z, etc.) within a precursor range (e.g., 50-1600 m/z, 200-1200 m/z, 400-1000 m/z, etc.) such as to cover all or a portion of the full range of possible precursor ions included in the plurality of packets 114 of precursor ions. As used herein, the term "precursor range" refers to the total range of m/z of the sampled precursors over multiple acquisitions. To illustrate, an MS2 precursor range of 400-1000 m/z may be fully covered by 30 MS2 acquisitions with a 20 m/z isolation window or 60 MS2 acquisitions with a 10 m/z isolation window.

Accordingly, second pre-separation device 104-2 is synchronized with mass spectrometer 106 such that the m/z range of the precursor ions included in each packet 114 of precursor ions corresponds with the m/z isolation window of mass spectrometer 106 for each MS2 acquisition. The m/z range of the precursor ions included in each packet 114 may correspond with the m/z isolation window of mass spectrometer 106 by having an m/z range that is the same as the m/z isolation window, having an m/z range that is within the m/z isolation window, or having an m/z range that overlaps with the m/z isolation window. Second pre-separation device 104-2 is configured to selectively emit one or more packets 114 of precursor ions having an m/z range corresponding with the m/z isolation window of mass spectrometer 106 while retaining remaining packets 114 of precursor ions for subsequent emission.

Controller 108 may be communicatively coupled with, and configured to control operations of, system 100 (e.g., ion source 102, pre-separation devices 104, and mass spectrometer 106). Controller 108 may include any suitable hardware (e.g., a processor, circuitry, etc.) and/or software configured to control operations of and/or interface with the various components of system 100 (e.g., ion source 102, pre-separation devices 104, and mass spectrometer 106).

To illustrate, controller 108 may be configured to control settings and operation of ion source 102, pre-separation devices 104, mass filter 116, collision cell 118, and/or mass analyzer 120. For example, controller 108 may control an oscillatory voltage power supply and/or a DC power supply to supply a radio frequency (RF) voltage and/or a direct current (DC) voltage to pre-separation devices 104, mass filter 116, and/or mass analyzer 120, adjust values of the RF voltage and DC voltage to select an effective m/z (including a mass tolerance window) for analysis, and adjust the sensitivity of the ion detector (e.g., by adjusting the detector gain).

Controller 108 may also include and/or provide a user interface configured to enable interaction between a user of mass spectrometer 106 and controller 108. The user may interact with controller 108 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 108. In other examples the display device and/or input device may be separate from, but communicatively coupled to, controller 108. For instance, the display device and the input device may be included in a computer (e.g., a desktop computer, a laptop computer, etc.) communicatively connected to controller 108 by way of a wired connection (e.g., by one or more cables) and/or a wireless connection.

Controller 108 may include any suitable hardware (e.g., a processor, circuitry, etc.) and/or software as may serve a particular implementation. FIG. 1 shows that controller 108 is implemented separately from mass spectrometer 106 (e.g., a computing device communicatively coupled to mass spectrometer 106 by way of a wired connection (e.g., a cable) and/or a network (e.g., a local area network, a wireless network (e.g., Wi-Fi), a wide area network, the Internet, a cellular data network, etc.)). Controller 108 may alternatively be included in whole or in part in mass spectrometer 106.

The pre-separation methods, systems, and apparatuses described herein may operate as part of or in conjunction with system 100 described herein and/or with any other suitable mass spectrometer or mass spectrometry system, including a combined separation-mass spectrometry system, such as a liquid chromatography-mass spectrometry system (LC-MS), a high-performance liquid chromatography-mass spectrometry (HPLC-MS) system, a gas chromatography-mass spectrometry (GC-MS) system, or a capillary electrophoresis-mass spectrometry (CE-MS) system. The methods, systems, and apparatuses described herein may also operate in conjunction with a continuous flow sample source, such as in flow-injection mass spectrometry (FI-MS) in which analytes are injected into a mobile phase without separation in a column and enter the mass spectrometer.

While the illustrated example shows second pre-separation device 104-2 as being positioned downstream of first pre-separation device 104-1, in some other examples, second pre-separation device 104-2 may be positioned upstream of first pre-separation device 104-1 such that system 100 is configured to separate precursor ions according to m/z by way of second pre-separation device 104-2 and then according to mobility by way of first pre-separation device 104-1. For example, second pre-separation device 104-1 may be configured to receive pre-cursor ions from ion source 102 and sequentially emit a plurality of subsets 112 of precursor ions based on an m/z of the precursor ions. First pre-separation device 104-1 may be configured to receive the plurality of subsets 112 from second pre-separation device 104-2 and, for each subset 112 of precursor ions, spatially separate the precursor ions into a plurality of packets 114 of precursor ions according to mobilities of the precursor ions and sequentially emit the plurality of packets 114 of precursor ions to mass spectrometer 106 for mass analysis.

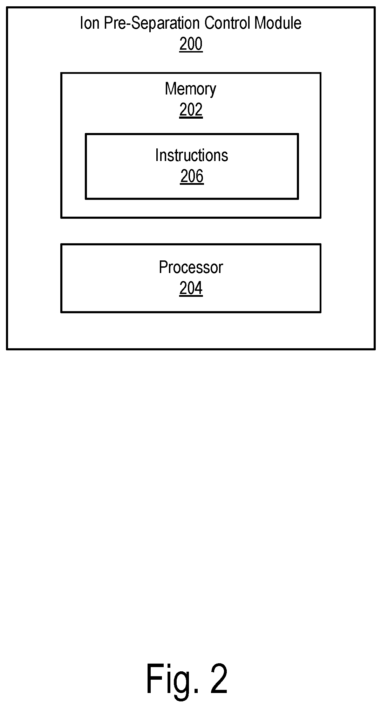

System 100 may be used in conjunction with an ion pre-separation control module to perform hybridized ion pre-separation of precursor ions. FIG. 2 shows a functional diagram of an illustrative ion pre-separation control module 200 ("control module 200"). Control module 200 may be implemented entirely or in part by system 100 (e.g., by controller 108). Alternatively, control module 200 may be implemented separately from system 100 (e.g., a remote computing system or server separate from but communicatively coupled to controller 108).

Control module 200 may include, without limitation, a memory 202 and a processor 204 selectively and communicatively coupled to one another. Memory 202 and processor 204 may each include or be implemented by hardware and/or software components (e.g., processors, memories, communication interfaces, instructions stored in memory for execution by the processors, etc.). In some examples, memory 202 and processor 204 may be distributed between multiple devices and/or multiple locations as may serve a particular implementation.

Memory 202 may maintain (e.g., store) executable data used by processor 204 to perform any of the operations described herein. For example, memory 202 may store instructions 206 that may be executed by processor 204 to perform any of the operations described herein. Instructions 206 may be implemented by any suitable application, software, code, and/or other executable data instance.

Memory 202 may also maintain any data acquired, received, generated, managed, used, and/or transmitted by processor 204. For example, memory 202 may maintain hybridized ion pre-separation MS/MS data (e.g., acquired mass spectra data) and/or an ion pre-separation algorithm, as described below.

Processor 204 may be configured to perform (e.g., execute instructions 206 stored in memory 202 to perform) various processing operations described herein. For example, ion pre-separation control module 200 may control pre-separation devices to synchronize with a mass spectrometer such that an m/z range of the precursor ions emitted from the pre-separation devices correspond to a precursor m/z isolation window of the mass spectrometer. Ion pre-separation control module 200 may also control a mass spectrometer to acquire mass spectra of product ions derived from precursor ions isolated based on the precursor m/z isolation window.

It will be recognized that the operations and examples described herein are merely illustrative of the many different types of operations that may be performed by processor 204. In the description herein, any references to operations performed by control module 200 may be understood to be performed by processor 204 of control module 200. Furthermore, in the description herein, any operations performed by control module 200 may be understood to include control module 200 directing or instructing another system (e.g., system 100) or device (e.g., any component of system 100) to perform the operations.

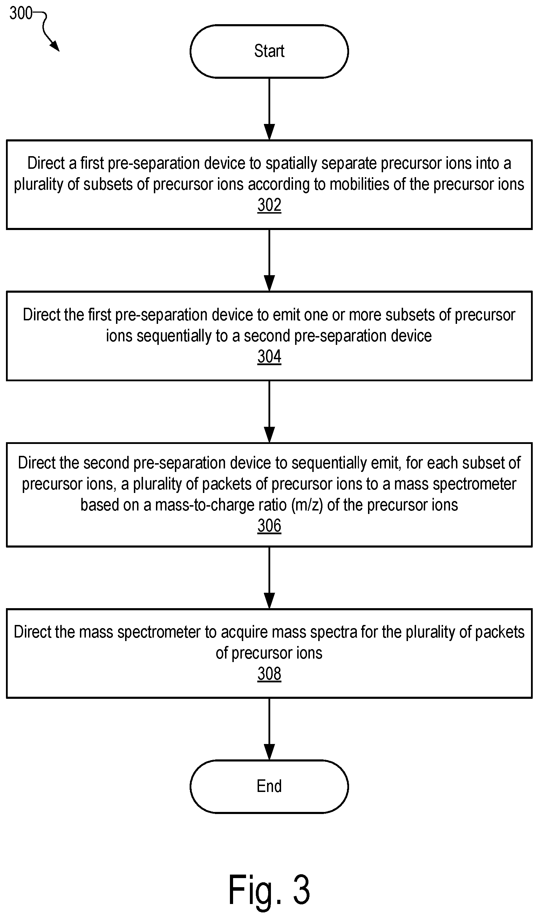

FIG. 3 shows an illustrative method 300 of performing hybridized ion pre-separation. While FIG. 3 shows illustrative operations according to one embodiment, other embodiments may omit, add to, reorder, and/or modify any of the operations shown in FIG. 3. One or more of the operations shown in FIG. 3 may be performed by system 100 and/or control module 200, any components included therein, and/or any implementations thereof (e.g., mass spectrometer 106, one or more components of mass spectrometer 106, controller 108, and/or a remote computing system separate from but communicatively coupled to mass spectrometer 106).

Method 300 includes, at operation 302, directing a first pre-separation device (e.g., first pre-separation device 104-1) to spatially separate precursor ions received from ion source 102 into a plurality of subsets (e.g., subsets 112) of precursor ions according to mobilities of the precursor ions. As an illustrative example, the first pre-separation device is a differential mobility analyzer that includes a differential mobility separator configured to spatially separate precursor ions according to ion mobility within a gas flow region of the first pre-separation device having a flow of gas in a first direction and an electric field gradient in a second direction that is different than the first direction. As the precursor ions are carried downstream in the first direction by the flow of gas, the electric field gradient directs the precursor ions in the second direction. The precursor ions migrate through the gas flow region of the first pre-separation device in accordance with ion mobility properties of the precursor ions and spatially separate from each other during the migration. For example, larger precursor ions (e.g., precursor ions having a greater cross-section) may travel more slowly in the second direction than smaller precursor ions (e.g., precursor ions having a smaller cross-section), which results in a separation of precursor ions along the first direction into a plurality of subsets of precursor ions. This separation allows each subset of precursor ions exiting the gas flow region of the first pre-separation device to have a different range of ion mobilities relative to the other subsets of precursor ions exiting the gas flow region. For example, the smaller precursor ions may be separated into one subset of precursor ions while the larger precursor ions may be separated into another subset of precursor ions. The precursor ions may be separated into any suitable number of subsets.

In some examples, directing the first pre-separation device to spatially separate the precursor ions includes directing the first pre-separation device to provide the flow of gas and/or the electric field gradient within the gas flow region of the first pre-separation device. Moreover, directing the first pre-separation device to spatially separate the precursor ions may include setting or controlling one or more parameters of the flow of gas (e.g., a speed of the flow of gas, a type of gas, a direction of the flow of gas, etc.) and/or the electric field gradient (e.g., an amount of the electric field gradient, a direction of the electric field gradient, a type of the electric field gradient, etc.) of the first pre-separation device. To illustrate, the first pre-separation device may be directed to apply the flow of gas and/or the electric field gradient at a constant gas flow rate and/or electric field gradient. Additionally or alternatively, the first pre-separation device may be directed to vary the flow of gas and/or the electric field gradient over time.

In some examples, the first pre-separation device includes a plurality of channels configured to receive and/or store precursor ions as the precursor ions exit the gas flow region. The plurality of channels may include ion traps, RF ion guides, DC ion lenses, or a combination thereof. In these examples, directing the first pre-separation device to spatially separate precursor ions includes directing the first pre-separation device to store the plurality of subsets of precursor ions within the plurality of channels. To illustrate, directing the first pre-separation device to store the plurality of subsets of precursor ions includes directing the first pre-separation to provide an electrical potential at each channel to selectively halt the flow of precursor ions (e.g., to accumulate precursor ions within the channels). Each channel of the plurality of channels may be directed to store a distinct subset of precursor ions included in the plurality of subsets of precursor ions.

In alternative examples, directing the first pre-separation device to spatially separate precursor ions includes directing the first pre-separation device to continuously transport the precursor ions through the first pre-separation device without storing the subsets of precursor ions within channels of the first pre-separation device. As an illustrative example, the first pre-separation device includes a trapped ion mobility separator configured to simultaneously provide a flow of gas in a first direction and a variable electric field gradient in a second direction (e.g., opposite the first direction). By varying the electric field gradient, precursor ions are separated according to mobility. As another illustrative example, the first pre-separation device includes a drift ion mobility separator (e.g., including a drift tube and/or SLIM-enabled folded path separator) that is configured to trap and pulse precursor ions for subsequent ion mobility separation along an ion separation path. As will be explained below, each subset of precursor ions included in the plurality of subsets of precursor ions exits the first pre-separation device at a distinct time according to the ion mobilities of the precursor ions included in the subset of precursor ions.

Method 300 includes, at operation 304, directing the first pre-separation device to sequentially emit the plurality of subsets of precursor ions to a second pre-separation device (e.g., second pre-separation device 104-2). In instances where the first pre-separation device is configured to store the plurality of subsets of precursor ions within a plurality of channels, directing the first pre-separation device to sequentially emit the subsets of precursor ions may include directing the first pre-separation device to sequentially emit the plurality of subsets of precursor ions from the plurality of channels. As an illustrative example, directing the first pre-separation device to sequentially emit the plurality of subsets of precursor ions includes directing each channel to provide, at certain controlled times, an electric potential that permits the flow of precursor ions (e.g., to eject precursor ions from the channels). Each channel may be controlled separately such that the first pre-separation device may be directed to sequentially emit the plurality of subsets of precursor ions from the plurality of channels, such as one subset at a time. In other examples, a subset of the plurality of channels can be directed to emit each associated subset of precursor ions simultaneously, i.e., two or three channels. The subset of the plurality of channels that emit simultaneously can be chosen according to spatial separation between the channels (e.g., channels that are not proximate can be directed to emit simultaneously) or according to known or predicted identities of the precursor ions (e.g., channels containing precursor ions of widely varying m/z values can be directed to emit simultaneously).

In instances where the first pre-separation device does not store the plurality of subsets of precursor ions within a plurality of channels, directing the first pre-separation device to sequentially emit the plurality of subsets of precursor ions includes directing the first pre-separation device to sequentially emit the plurality of subsets of precursor ions as the subsets of precursor ions are continuously transported through the first pre-separation device. To illustrate, the smaller precursor ions may migrate more quickly through the first pre-separation device than the larger precursor ions such that a subset of precursor ions including smaller precursor ions is emitted prior to another subset of precursor ions including larger precursor ions.

In some examples, directing the first pre-separation device to sequentially emit the plurality of subsets of precursor ions further includes directing the first pre-separation device to emit the plurality of subsets of precursor ions according to a timing scheme. To illustrate, the timing scheme includes emitting precursor ions from the first pre-separation device at predetermined intervals (e.g., an initial subset of precursor ions is emitted from the first pre-separation device prior to emitting a next subset of precursor ions). The predetermined intervals may be based on one or more characteristics of the precursor ions (e.g., a number of subsets of precursor ions, a number of channels of storing the subsets of precursor ions, a number of precursor ions included in each subset of precursor ions, a duration of accumulating precursor ions within the first pre-separation device, etc.) and/or performed periodically (e.g., about every 250 milliseconds (ms), 100 ms, 50 ms, 25 ms, etc.).

Method 300 includes, at operation 306, directing the second pre-separation device to sequentially emit, for each subset of precursor ions, a plurality of packets (e.g., packets 114) of precursor ions to a mass spectrometer (e.g., mass spectrometer 106) based on the m/z of the precursor ions. As an illustrative example, the second pre-separation device is directed to provide an electric field gradient to each subset of precursor ions to sequentially emit a plurality of packets of precursor ions according to m/z of the precursor ions included in each subset of precursor ions. The second pre-separation device can use mass-dependent axial ejection of precursor ions such that the precursor ions within an m/z range that are stable within the electric field gradient travel through the second pre-separation device as a packet of precursor ions, while precursor ions outside of the m/z range that are unstable within the electric field gradient do not travel through the second pre-separation device and/or are discarded from the second pre-separation device.

The second pre-separation device may be directed to vary the electric field gradient for each subset of precursor ions to allow precursor ions having various m/z ranges to be separated into the plurality of packets of precursor ions (e.g., each packet of precursor ions exiting the second pre-separation device has a different m/z range relative to other packets of precursor ions). For example, the precursor ions, within a particular subset of precursor ions, having a smaller m/z are separated into one packet of precursor ions while the precursor ions, within the particular subset of precursor ions, having a larger m/z are separated into another packet of precursor ions. Moreover, directing the second pre-separation device to sequentially emit the precursor ions may include setting or controlling one or more parameters of the electric field gradient (e.g., an amount of the electric field gradient, a direction of the electric field gradient, a type of the electric field gradient, etc.) provided by the second pre-separation device.

In some examples, directing the second pre-separation device to sequentially emit the plurality of packets of precursor ions further includes directing the second pre-separation device to emit the plurality of packets of precursor ions according to a timing scheme. For example, the timing scheme includes emitting the plurality of packets of precursor ions from the second pre-separation device based on an initial subset of precursor ions prior to emitting a next subset of precursor ions from the first pre-separation device. Additionally or alternatively, the timing scheme includes emitting the plurality of packets of precursor ions from the second pre-separation device based on the initial subset of precursor ions while a next subset of precursor ions is emitted from the first pre-separation device. Additionally or alternatively, the timing scheme includes emitting precursor ions from the second pre-separation device at predetermined intervals (e.g., an initial packet of precursor ions is emitted from the second pre-separation device prior to emitting a next packet of precursor ions). The predetermined intervals may be based on one or more characteristics of the precursor ions (e.g., a number of packets of precursor ions, a number of precursor ions included in each packet of precursor ions, etc.) and/or performed periodically (e.g., about every 250 ms, 100 ms, 50 ms, 25 ms, 10 ms, 5 ms, etc.).

Accordingly, the first pre-separation of precursor ions, by the first pre-separation device, separates the precursor ions into the plurality of subsets of precursor ions according to mobility of the precursor ions. Although the m/z ranges for these subsets of precursor ions are narrower than the original m/z range of the sample, the m/z ranges for these subsets may still be larger than the m/z isolation windows of the mass spectrometer (e.g., depending on the nature of the sample). By performing the second pre-separation of the precursor ions, by the second pre-separation device, into the plurality of packets of precursor ions based on m/z of the precursor ions, the m/z ranges of the packets of precursor ions are further separated into smaller m/z ranges than the subsets of precursor ions. In some instances, the width of the m/z ranges for these packets may be about 10 m/z to about 50 m/z, such as about 25m/z. The m/z ranges for the plurality of packets of precursor ions thereby more closely correspond to the m/z isolation windows of the mass spectrometer.

Method 300 includes, at operation 308, directing the mass spectrometer to acquire mass spectra for the plurality of packets of precursor ions. To illustrate, the directing the mass spectrometer to acquire mass spectra includes directing a mass analyzer (e.g., mass analyzer 120) to detect ions based on each packet of precursor ions ejected from the second pre-separation device at a variety of different m/z and responsively generate a signal. For example, the signal includes an electrical signal representative of ion intensities based on the precursor ions ejected from the second pre-separation device for each corresponding packet of precursor ions. The signal may be obtained for each packet of precursor ions such that a plurality of signals are obtained for the plurality of packets of precursor ions.

The directing the mass spectrometer to acquire mass spectra may further include generating the mass spectra and/or directing the mass spectrometer to generate the mass spectra based on the signals generated by the mass analyzer. For example, each signal associated with the precursor ions ejected from the second pre-separation device is used to generate a mass spectrum representative of an intensity of the ions as a function of m/z such that a mass spectrum is generated based on each packet of precursor ions ejected from the second pre-separation device. In some examples, the directing the mass spectrometer to acquire mass spectra further includes outputting information (e.g., mass spectra, notifications, etc.) to a user interface for displaying the information to a user within a display device of the user interface.

The second pre-separation device and the mass spectrometer are synchronized with each other. In some examples, directing the second pre-separation device to sequentially emit the plurality of packets of precursor ions includes directing the second pre-separation device to emit a packet of precursor ions that include precursor ions having an m/z range within the m/z isolation window of the mass spectrometer for a particular MS2 acquisition. Alternatively, directing the mass spectrometer to acquire mass spectra includes directing the mass spectrometer to acquire mass spectra based on the m/z range of the precursor ions included in a packet of precursor ions emitted from the second pre-separation device. Moreover, in instances where the mass spectrometer includes a mass filter configured to filter the plurality of packets of precursor ions based on the m/z of the precursor ions being within the precursor m/z isolation window, the second pre-separation device is synchronized with the mass filter such that the m/z range of the precursor ions included in each packet of precursor ions emitted from the second pre-separation device corresponds to a precursor m/z isolation window of the mass filter. The mass spectrometer may be further configured to fragment the plurality of packets of precursor ions within the precursor m/z isolation window (e.g., by way of collision cell 118) into product ions and acquire the mass spectra based on the product ions (e.g., by way of mass analyzer 120).

Still other suitable configurations for acquiring mass spectra for the plurality of packets of precursor ions may be used. As an illustrative example, the first pre-separation device is additionally synchronized with the mass spectrometer such that an ion mobility range of the precursor ions in each subset of precursor ions emitted from the first pre-separation device includes precursor ions that are within a precursor m/z isolation window.

Such first pre-separation of the precursor ions into subsets of precursor ions according to mobility preserves the precursor ions while the precursor ions are waiting to be transferred to the mass spectrometer for MS analysis within a particular precursor m/z isolation window of the mass spectrometer. Moreover, such second pre-separation of the subsets of precursor ions according to m/z of the precursor ions allows the mass spectrometer to have a smaller precursor m/z isolation window and therefore increased sensitivity, as compared to pre-separating precursor ions based solely on mobility. Additionally, the first pre-separation based on mobility decreases the charge loads needed for the m/z-based separation, provides a separation of charged states of interfering ions, and increases the efficiency of the m/z-based separation, as compared to pre-separating precursor ions based solely on m/z.

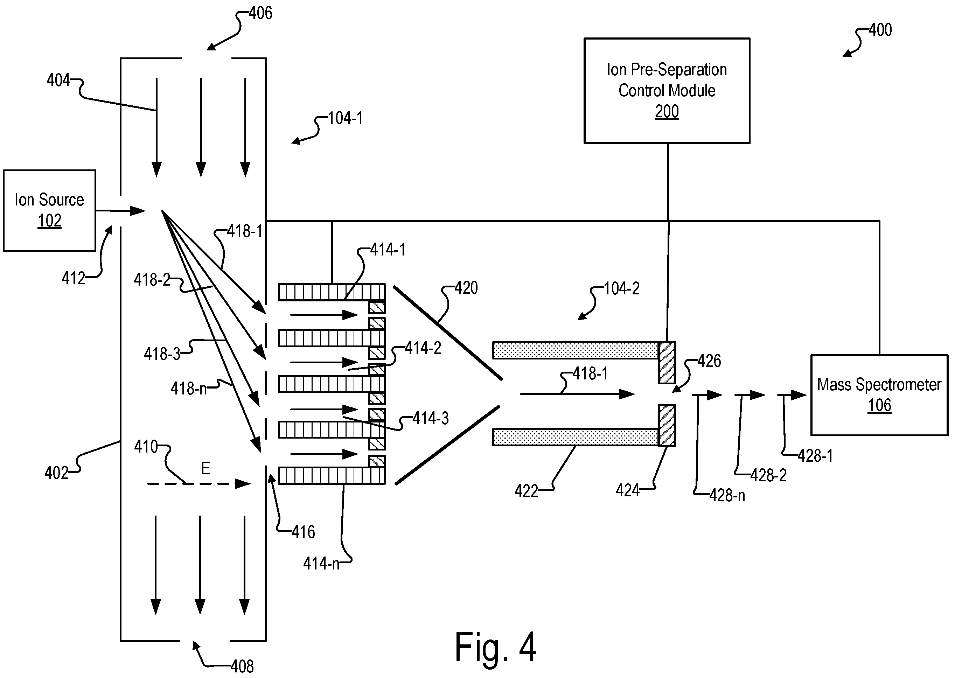

Fig. 4 shows an illustrative implementation 400 of system 100 for performing the method FIG. 3. As shown, first pre-separation device 104-1 is positioned downstream of ion source 102 and is implemented by a differential mobility analyzer including a differential mobility separator. First pre-separation device 104-1 includes an ion mobility cell 402 having a gas flow region with a gas stream (indicated by arrows 404) flowing in a first direction from a gas inlet 406 at one end of ion mobility cell 402 to a gas outlet 408 at another end (e.g., the opposite end) of ion mobility cell 402. Additionally, an electrical field gradient (indicated by arrow 410) is applied in a second direction. In various examples, the first direction and the second direction can form an angle of between about 0 degrees and about 180 degrees, such as between about 45 degrees and about 135 degrees, such as between about 70 degrees and about 110 degrees. In particular examples, the first direction and the second direction may be substantially orthogonal (at right angles within a small tolerance, e.g., ±5 degrees) to one another. A gas pressure within the ion mobility cell 402 may be between about 1 Torr and about 20 Torr, between about 3 Torr and about 6 Torr, or any other suitable range or value. In various examples, the gas velocity within ion mobility cell 402 may be between about 100 m/s and about 300 m/s, between about 150 m/s and about 200 m/s or any other suitable range or value.

Ions provided by ion source 102 enter ion mobility cell 402 at an ion entrance 412. First pre-separation device 104-1 further includes a plurality of ion channels 414 (e.g., channels 414-1 to 414-n) located proximal to a plurality of ion exit orifices 416. In some examples, ion channels 414 and ion exit orifices 416 are arranged in an array along the first direction. For example, ion exit orifices 416 are located opposite of ion entrance 412 in the second direction and are level with and/or offset (downstream) from ion entrance 412 and spaced apart from one another in the first direction. Precursor ions entering ion mobility cell 402 from ion source 102 are separated into a plurality of subsets 418 of precursor ions (e.g., subsets 418-1 through 418-n, represented by arrows) based on their differential ion mobilities, exit through ion exit orifices 416, and are directed into the array of ion channels 414.

To illustrate, precursor ions flow at substantially the same velocity along the first direction (due to the gas stream) and move in the second direction with differential velocities according to their collisional cross section. Precursor ions with a larger collisional cross section (e.g., precursor ions included in subset 418-n) move more slowly in the second direction due to a larger number of collisions with the molecules in the gas stream relative to precursor ions with a smaller collisional cross section (e.g., precursor ions included in subset 418-1). Due to the slower movement in the second direction, precursor ions with the larger collisional cross section move farther along the first direction during their transit through ion mobility cell 402. In this way, precursor ions with successively larger collisional cross section are sorted into subsets 418 in the array of ion channels 414, such that precursor ions included in a subset 418 of precursor ions in an ion channel have a different range of ion mobilities from precursor ions included in another subset 418 of precursor ions in an adjacent ion channel. For example, a first subset 418-1 of precursor ions having a first range of ion mobilities is separated into a first channel 414-1, a second subset 418-2 of precursor ions having a second range of ion mobilities is separated into a second channel 414-2, a third subset 418-3 of precursor ions having a third range of ion mobilities is separated into a third channel 414-3, and so on.

In various examples, ion channels 414 are implemented by one or more ion traps, RF ion guides, DC ion lenses, or a combination thereof. In some examples, ion channels 414 include ion traps each defined by a plurality of rod electrodes (e.g., a quadrupole). Additionally, each ion trap may include one or more drag vanes. In certain examples, adjacent ion traps in the array of ion traps share a pair of rod electrodes.

In various examples, the plurality of ion channels 414 include between about 3 ion channels and about 50 ion channels, between about 5 ion channels and about 20 ion channels, between about 7 ion channels and about 15 ion channels, or any other suitable number of ion channels. Ion channels 414 show as linear channels arranged in a linear array. In other examples, ion channels 414 may have any other suitable geometry (e.g., curved, bent, non-linear, etc.) and/or orientations, and the arrangement of the plurality of ion channels may have any suitable configuration, such as an annular array or a curved array.

In various examples, a lens array (not shown) may be positioned between ion exit orifices 416 and ion channels 414. The lens array may be configured to guide subsets 418 of precursor ions into the respective ion channel 414, such as by focusing subsets 418 of precursor ions towards the centerline of the ion channel 414.

Control module 200 may be configured to direct first pre-separation device 104-1 to spatially separate precursor ions received from ion source 102 into the plurality of subsets 418 of precursor ions, such as by directing first pre-separation device 104-1 to receive precursor ions from ion source 102, provide the gas stream, and/or provide the electric field gradient within ion mobility cell 402 of first pre-separation device 104-1. Moreover, control module 200 may direct first pre-separation device 104-1 to spatially separate the precursor ions by setting one or more parameters of the gas stream (e.g., a speed of the flow of gas, a type of gas, a direction of the flow of gas, etc.) and/or the electric field gradient (e.g., an amount of the electric field gradient, a direction of the electric field gradient, a type of the electric field gradient, etc.) of first pre-separation device 104-1.

In the example in FIG. 4, first pre-separation device 104-1 is configured to sequentially emit subsets 418 of precursor ions from channels 414 (e.g., in response to control signals received from control module 200). To illustrate, control module 200 is configured to direct, at certain times, channels 414 of first pre-separation device 104-1 to provide an electrical potential to halt the flow of precursor ions within channels 414 and to direct, at certain other times, one or more select channels 414 of first pre-separation device 104-1 to provide an electrical potential (e.g., a reduced electrical potential) to allow the flow of precursor ions from the one or more select channels 414. The one or more select channels 414 are controlled to sequentially emit subsets 418 of precursor ions. For example, first subset 418-1 of precursor ions is emitted from first channel 414-1, second subset 418-2 of precursor ions is emitted from second channel 414-2 (e.g., after first subset 418-1 of precursor ions has been emitted), third subset 418-3 of precursor ions is emitted from third channel 414-3 (e.g., after second subset 418-2 of precursor ions has been emitted), and so on until a desired number of subsets 418 of precursor ions have been emitted from first pre-separation device 104-1. Channels 414 may be sequentially controlled in any order to allow the flow of precursor ions (e.g., to emit subsets 418 of precursor ions in any sequence). In some examples, channels 414 are controlled to sequentially emit subsets 418 of precursor ions in order of increasing (or decreasing) ion mobilities.

Ion optics 420 (e.g., a cooling/transfer guide) is located adjacent to the plurality of ion channels 414 between first pre-separation device 104-1 and second pre-separation device 104-2. Ion optics 420 is configured to guide the plurality of subsets 418 of precursor ions emitted from first pre-separation device 104-1 to second pre-separation device 104-2. For example, ion optics 420 may direct precursor ions included in each subset 418 of precursor ions emitted from first pre-separation device towards a central axis of second pre-separation device 104-2. In the example of FIG. 4, ion optics 420 is depicted as a funnel. However, a funnel is merely optional, as any one or more additional and/or alternative devices and/or ion optics may be used to guide ions from ion channels 414 to second pre-separation device 104-2.

Second pre-separation device 104-2 is positioned downstream of first pre-separation device 104-1 and collector funnel 420 such that second pre-separation device 104-2 is configured to receive the plurality of subsets 418 of precursor ions as subsets 418 of precursor ions are sequentially emitted from ion channels 414. Second pre-separation device 104-2 is an m/z separator that includes a linear ion trap defined by a plurality of rod electrodes 422 (e.g., a quadrupole, a hexapole, an octupole, etc.) and an end electrode 424 positioned at a downstream end of rod electrodes 422. End electrode 424 includes an aperture 426 through which, for each subset 418 of precursor ions received from first pre-separation device 104-1, a plurality of packets 428 (e.g., packets 428-1 to 428-n) of precursor ions are sequentially emitted from second pre-separation device 104-2 to mass spectrometer 106.

In some examples, rod electrodes 422 are configured to provide an electric field gradient (e.g., an RF-field pseudopotential) that is m/z dependent such that precursor ions within an m/z range that are stable within the electric field gradient accumulate within second pre-separation device 104-2 as a packet 428 of precursor ions, while precursor ions outside of the m/z range that are unstable within the electric field gradient do not accumulate within second pre-separation device 104-2 and/or are discarded from second pre-separation device 104-2. In some examples, the electric field gradient may spatially organize precursor ions according to m/z of the precursor ions. In the illustrated example, rod electrodes 422 of second pre-separation device 104-2 are configured to provide the electric field gradient in response to control signals received from control module 200. Moreover, control module 200 may set or control one or more parameters of the electric field gradient (e.g., an amount of the electric field gradient, a direction of the electric field gradient, a type of the electric field gradient, etc.) provided by second pre-separation device 104-2.

The electric field gradient provided by rod electrodes 422 may be varied for each subset 418 of precursor ions such that precursor ions having various m/z ranges are sequentially emitted as packets 428 of precursor ions (e.g., each distinct packet 428 of precursor ions has a different m/z range relative to other packets 428 of precursor ions in the same subset 418 of precursor ions). As an illustrative example, the electric field gradient provided by rod electrodes 422 is varied such as to order packets 428 of precursor ions in an m/z dependent manner (e.g., in the order of increasing and/or decreasing m/z values).

End electrode 424 is configured to provide a blocking potential (e.g., a DC blocking potential) configured to halt, at certain times, the flow of precursor ions within second pre-separation device 104-2 and to allow, at certain other times, the flow of precursor ions through aperture 426 (e.g., the blocking potential may be reduced at certain times to allow packets 428 of precursor ions to flow through aperture 426). In the illustrated example, end electrode 424 is configured to provide the blocking potential in response to control signals received from control module 200. Moreover, control module 200 may control one or more parameters of the blocking potential (e.g., an amount of the blocking potential, a direction of the blocking potential, a type of the blocking potential, etc.) provided by second pre-separation device 104-2.

The blocking potential at end electrode 424 may be provided to sequentially emit the plurality of packets 428 of precursor ions through aperture 426 based on m/z of the precursor ions. To illustrate, the precursor ions, within the first subset 418-1 of precursor ions, having a larger m/z may be emitted as a first packet 428-1 of precursor ions while the precursor ions, within the first subset 418-1 of precursor ions, having a smaller m/z may be emitted as another packet 428-n of precursor ions. Such m/z pre-separation may be repeated for each subset 418 of precursor ions emitted from first pre-separation device 104-1 such that each subset 418 of precursor ions is further separated into a plurality of packets 428 of precursor ions that are sequentially emitted from second pre-separation device 104-2 based on the m/z of the precursor ions.

Mass spectrometer 106 is positioned downstream of second pre-separation device 104-2 and is configured to receive the plurality of packets 428 of precursor ions emitted from second pre-separation device 104-2 and acquire mass spectra for the plurality of packets 428 of precursor ions. For example, a mass analyzer (e.g., mass analyzer 120) of mass spectrometer 106 generates a signal based on product ions produced from precursor ions included within each packet 428 of precursor ions ejected from second pre-separation device 104-2 at a variety of different m/z. The signal may include an electrical signal representative of ion intensities based on the precursor ions ejected from second pre-separation device 104-2 for each corresponding packet 428 of precursor ions. In some examples, control module 200 may be configured to direct mass spectrometer 106 to generate the signal and/or may obtain the signal generated by mass spectrometer 106.

Second pre-separation device 104-2 is synchronized with mass spectrometer 106 such that an m/z range of the precursor ions included in each packet 428 of precursor ions emitted from second pre-separation device 104-2 corresponds to a precursor m/z isolation window of mass spectrometer 106 (e.g., for each MS2 acquisition). To illustrate, precursor ions having an m/z range that are stable within the electric field gradient provided by rod electrodes 422 of second pre-separation device 104-2 correspond to an m/z range included in the precursor m/z isolation window of mass spectrometer 106. The precursor m/z isolation window of mass spectrometer 106 corresponds to an m/z range of a mass filter (e.g., mass filter 116) included in mass spectrometer 106 such that second pre-separation device 104-2 is synchronized with the mass filter. For example, the m/z range of the precursor ions included in each packet 428 of precursor ions emitted from second pre-separation device 104-2 corresponds to (e.g., is the same as or is within a threshold tolerance of) the m/z range of the precursor ions configured to travel through the mass filter. The electric field gradient provided by rod electrodes 422 may vary as the precursor m/z isolation window of mass spectrometer 106 varies to correspond to different m/z ranges (e.g., to acquire mass spectra for the plurality of packets 428 of precursor ions having different m/z ranges). The mass spectrometer is configured to fragment each isolated packet 428 of precursor ions within the precursor m/z isolation window (e.g., by way of collision cell 118) into product ions and acquire the mass spectra based on the product ions (e.g., by way of mass analyzer 120).

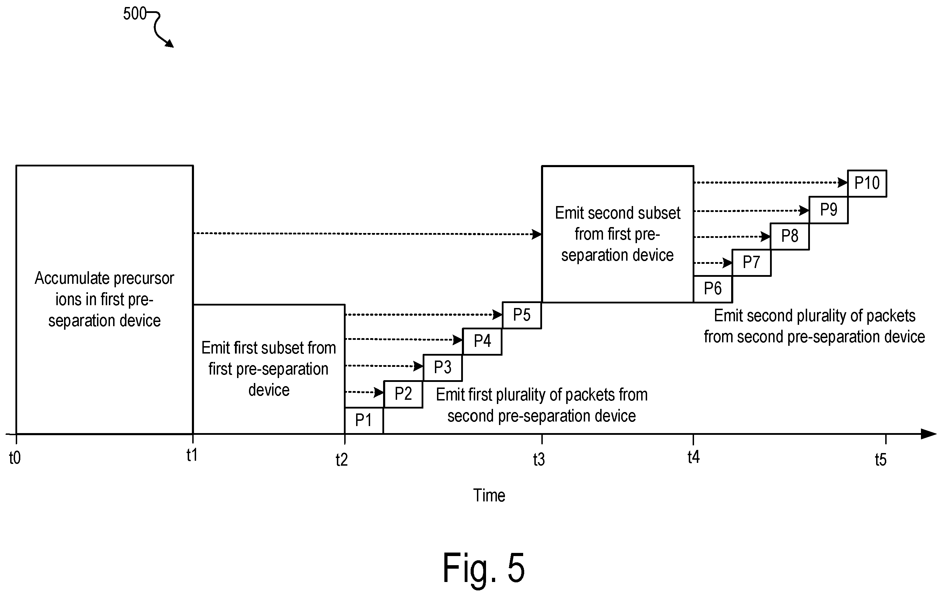

First pre-separation device 104-1 may be configured to emit the plurality of subsets 418 of precursor ions and/or second pre-separation device 104-2 may be configured to emit the plurality of packets 428 of precursor ions according to a timing scheme. FIG. 5 shows a schematic of an illustrative timing scheme 500 that includes emitting an initial subset 418 of precursor ions from first pre-separation device 104-1 and emitting the plurality of packets 428 of precursor ions from second pre-separation device 104-2 based on the initial subset 418 of precursor ions prior to emitting a next subset 418 of precursor ions from first pre-separation device 104-1. As shown, first pre-separation device 104-1 is configured to accumulate precursor ions (e.g., within channels 414) over a first time period (e.g., from time t0 to time t1) of timing scheme 500. First pre-separation device 104-1 then emits a first subset 418-1 of the accumulated precursor ions (e.g., from first channel 414-1) and second pre-separation device 104-2 accumulates first subset 418-1 of precursor ions over a second time period (e.g., from time t1 to time t2) of timing scheme 500. Second pre-separation device 104-2 then sequentially emits a first plurality of packets 428 (e.g., packets P1 to P5) of precursor ions to mass spectrometer 106 over a third time period (e.g., from time t2 to time t3) of timing scheme 500. Each emitted packet 428 from first subset 418-1 enters mass spectrometer 106 and a mass analysis is performed for the packet 428 of precursor ions. After the first plurality of packets 428 of precursor ions has been emitted from second pre-separation device 104-2, first pre-separation device 104-1 emits a second subset 418-2 of the accumulated precursor ions (e.g., from second channel 414-2) and second pre-separation device 104-2 accumulates second subset 418-2 of precursor ions over a fourth time period (e.g., from time t3 to time t4) of timing scheme 500. Second pre-separation device 104-2 then sequentially emits a second plurality of packets 428 (e.g., packets P6 to P10) of precursor ions to mass spectrometer 106 over a fifth time period (e.g., from time t4 to time t5) of timing scheme 500. Each emitted packet 428 from the second subset 418-2 enters mass spectrometer 106 and a mass analysis is performed for the packet 428 of precursor ions. First pre-separation device 104-1 and second pre-separation device 104-2 may continue to sequentially emit subsets 418 and packets 428 of precursor ions until each distinct subset 418 of precursor ions has been emitted from each channel 414.

As an illustrative example, first pre-separation device 104-1 may include 10 channels 414 (e.g., n = 10) such that first pre-separation device 104-1 accumulates precursor ions within the 10 channels 414 during the first time period for about 250 ms (e.g., about 25 ms per channel 414). First pre-separation device 104-1 then emits the first subset 418-1 of precursor ions from first channel 414-1 and second pre-separation device 104-2 accumulates first subset 418-1 of precursor ions over the second time period of about 25 ms. Second pre-separation device 104-2 emits the accumulated first subset 418-1 of precursor ions to mass spectrometer 106 in a first plurality of packets 428 sequentially over the third time period of about 25 ms (e.g., about 5 ms per packet 428). Mass spectrometer 106 performs a mass analysis of each packet 428 of first subset 418-1 as each packet 428 enters mass spectrometer 106. After the first plurality of packets 428 have been emitted, first pre-separation device 104-1 emits the second subset 418-2 of precursor ions from second channel 414-2 and second pre-separation device 104-2 accumulates second subset 418-2 of precursor ions over the fourth time period of about 25 ms. Second pre-separation device 104-2 emits the accumulated second subset 418-2 of precursor ions to mass spectrometer 106 in a second plurality of packets 428 over the fifth time period of about 25 ms (e.g., about 5 ms per packet 428). Mass spectrometer 106 performs a mass analysis of each packet 428 of second subset 418-2 as each packet 428 enters mass spectrometer 106. The sequential emission of subsets 418 and packets 428 of precursor ions from first and second pre-separation devices 104 continues for each of the 10 channels 414 of first pre-separation device 104-1. While the illustrated example includes 10 channels 414, any suitable number of channels 414 and/or time periods may be used for the hybridized separation, as well as any suitable length of time periods.

Second pre-separation device 104-2 is synchronized with mass spectrometer 106 such that an m/z range of the precursor ions included in each packet 428 of precursor ions emitted from second pre-separation device 104-2 corresponds to a precursor m/z isolation window of mass spectrometer 106 (e.g., for each MS2 acquisition). To illustrate, the m/z range (isolation window) of the mass filter included in mass spectrometer 106 corresponds to the m/z range of each packet emitted from second pre-separation device 104-2. Accordingly, the m/z range of the mass filter corresponds to the m/z range of the first packet P1 of precursor ions when the first packet P1 of precursor ions is emitted from second pre-separation device 104-2. The m/z range of the mass filter is then adjusted to correspond to the m/z range of the second packet P2 of precursor ions when the second packet P2 of precursor ions is emitted from the second pre-separation device 104-2, and so on until the plurality of packets 428 of precursor ions have been emitted.

Such a pre-separation of precursor ions according to timing scheme 500 improves the duty cycle for MS analysis. For example, accumulating and pre-separating the precursor ions into subsets 418 of precursor ions according to mobility in first pre-separation device 104-1 during the first time period preserves the precursor ions while the precursor ions are waiting to be transferred to mass spectrometer 106 for MS analysis. Moreover, accumulating and pre-separating the precursor ions into packets 428 of precursor ions according to m/z in second pre-separation device 104-2 during the remaining periods allows mass spectrometer 106 to have a smaller precursor m/z isolation window and increased sensitivity. The first pre-separation based on mobility may further decrease the charge loads that hinder m/z-based separation, provide a separation of charged states of interfering ions, and increase the efficiency of the m/z-based separation.

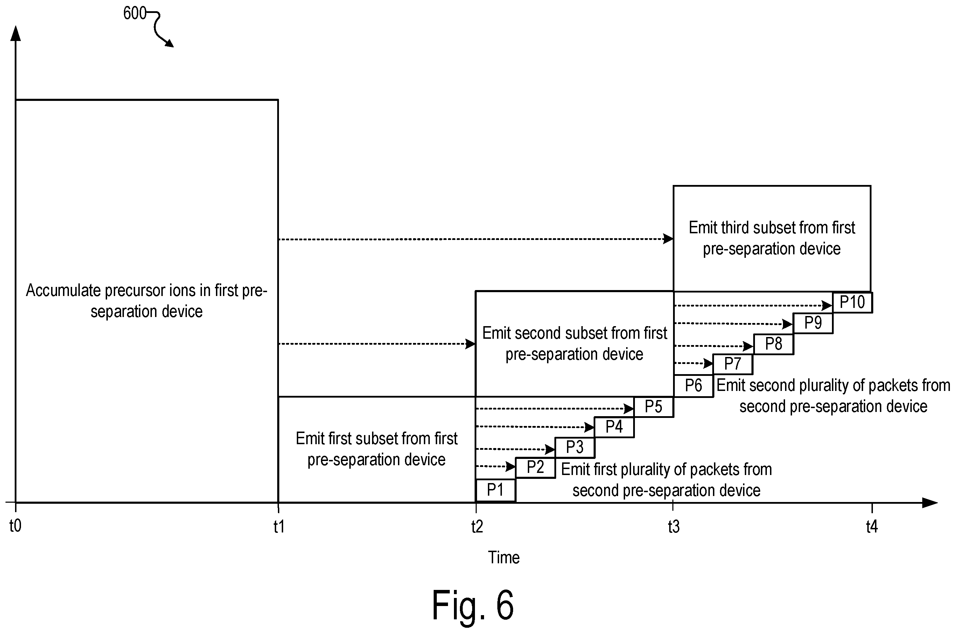

Other suitable timing schemes may be used. FIG. 6 shows a schematic of another illustrative timing scheme 600 that includes emitting an initial subset 418 of precursor ions from first pre-separation device 104-1 and emitting the plurality of packets 428 of precursor ions from second pre-separation device 104-2 based on the initial subset 418 of precursor ions while a next subset 418 of precursor ions is emitted from first pre-separation device 104-1. As shown, first pre-separation device 104-1 accumulates precursor ions (e.g., within channels 414) over a first time period (e.g., from time t0 to time t1) of timing scheme 600. First pre-separation device 104-1 then emits a first subset 418-1 of the accumulated precursor ions (e.g., from first channel 414-1) and second pre-separation device 104-2 accumulates the first subset 418-1 of precursor ions over a second time period (e.g., from time t1 to time t2) of timing scheme 600. Second pre-separation device 104-2 then sequentially emits a first plurality of packets 428 (e.g., packets P1 to P5) of precursor ions to mass spectrometer 106 over a third time period (e.g., from t2 to t3) of timing scheme 600. Each emitted packet 428 from the first subset 418-1 of precursor ions enters mass spectrometer 106 and a mass analysis is performed for the packet 428 of precursor ions. While the first plurality of packets 428 of precursor ions are emitted from second pre-separation device 104-2, first pre-separation device 104-1 simultaneously emits a second subset 418-2 of the accumulated precursor ions (e.g., from second channel 414-2) and second pre-separation device 104-2 accumulates the second subset 418-2 of precursor ions. Second pre-separation device 104-2 then sequentially emits a second plurality of packets 428 (e.g., packets P6 to P10) of precursor ions to mass spectrometer 106 over a fourth time period (e.g., from time t3 to time t4) of timing scheme 600. Each emitted packet 428 from the second subset 418-2 enters mass spectrometer 106 and a mass analysis is performed for the packet 428 of precursor ions. While the second plurality of packets 428 of precursor ions are emitted from second pre-separation device 104-2, first pre-separation device 104-1 simultaneously emits a third subset 418-3 of the accumulated precursor ions to second pre-separation device 104-2. First pre-separation device 104-1 and second pre-separation device 104-2 may continue to sequentially emit subsets 418 and packets 428 of precursor ions until each distinct subset 418 of precursor ions has been emitted from each channel 414.

As an illustrative example, first pre-separation device 104-1 may include 10 channels 414 (e.g., n=10) such that first pre-separation device 104-1 accumulates precursor ions within the 10 channels 414 during the first time period for about 250 ms (e.g., about 25 ms per channel 414). First pre-separation device 104-1 then emits the first subset 418-1 of precursor ions from first channel 414-1 and second pre-separation device 104-2 accumulates first subset 418-1 of precursor ions over the second time period of about 25 ms. Second pre-separation device 104-2 emits the accumulated first subset 418-1 of precursor ions to mass spectrometer 106 in a first plurality of packets 428 sequentially over the third time period of about 25 ms (e.g., about 5 ms per packet 428) while first pre-separation device 104-1 emits the second subset 418-2 of precursor ions from second channel 414-2 and second pre-separation device 104-2 accumulates the second subset 418-2 of precursor ions. Mass spectrometer 106 performs a mass analysis of each packet 428 of precursor ions from the first subset 418-1 as each packet 428 enters mass spectrometer 106. Second pre-separation device 104-2 emits the accumulated second subset 418-2 of precursor ions to mass spectrometer 106 in a second plurality of packets 428 sequentially over the fourth time period of about 25 ms (e.g., about 5 ms per packet 428) while first pre-separation device 104-1 emits the third subset 418-3 of precursor ions from third channel 414-3 and second pre-separation device 104-2 accumulates second subset 418-2 of precursor ions. Mass spectrometer 106 performs a mass analysis of each packet 428 from second subset 418-2 as each packet 428 enters mass spectrometer 106. The sequential emission of subsets 418 and packets 428 of precursor ions from first and second pre-separation devices 104 continues for each of the 10 channels 414 of first pre-separation device 104-1. While the illustrated example includes 10 channels 414, any suitable number of channels 414 and/or time periods may be used for the hybridized separation, as well as any suitable length of time periods.

Second pre-separation device 104-2 is synchronized with mass spectrometer 106 such that an m/z range of the precursor ions included in each packet 428 of precursor ions emitted from second pre-separation device 104-2 corresponds to a precursor m/z isolation window of mass spectrometer 106 (e.g., for each MS2 acquisition). To illustrate, the m/z range (e.g., isolation window) of the mass filter of mass spectrometer 106 corresponds to the m/z range of the first packet P1 of precursor ions when the first packet P1 of precursor ions is emitted from second pre-separation device 104-2. The m/z range of the mass filter is then adjusted to correspond to the m/z range of the second packet P2 of precursor ions when the second packet P2 of precursor ions is emitted from the second pre-separation device 104-2, and so on until the plurality of packets 428 of precursor ions have been emitted. As packets 428 of precursor ions are emitted from second pre-separation device 104-2, space inside second pre-separation device 104-2 becomes available to receive additional precursor ions from the next subset 418 of precursor ions such that accumulating and emitting packets 428 of precursor ions by second pre-separation device 104-2 may occur simultaneously.

Pre-separating precursor ions according to timing scheme 600 improves the duty cycle for MS analysis by pre-separating the precursor ions based on both precursor ion mobility and m/z of the precursor ions prior to performing an MS analysis of the precursor ions. For example, accumulating and pre-separating the precursor ions into subsets 418 of precursor ions according to mobility in first pre-separation device 104-1 during the first time period preserves the precursor ions while the precursor ions are waiting to be transferred to mass spectrometer 106 for MS analysis. Moreover, pre-separating the precursor ions into packets 428 of precursor ions according to m/z in second pre-separation device 104-2 while subsets 418 of precursor ions are simultaneously emitted from first pre-separation device 104-1 increases an efficiency of the MS analysis and allows mass spectrometer 106 to have a smaller precursor m/z isolation window and increased sensitivity. The first pre-separation based on mobility may further decrease the charge loads needed for the m/z-based separation, provide a separation of charged states of interfering ions, and increase the efficiency of the m/z-based separation.

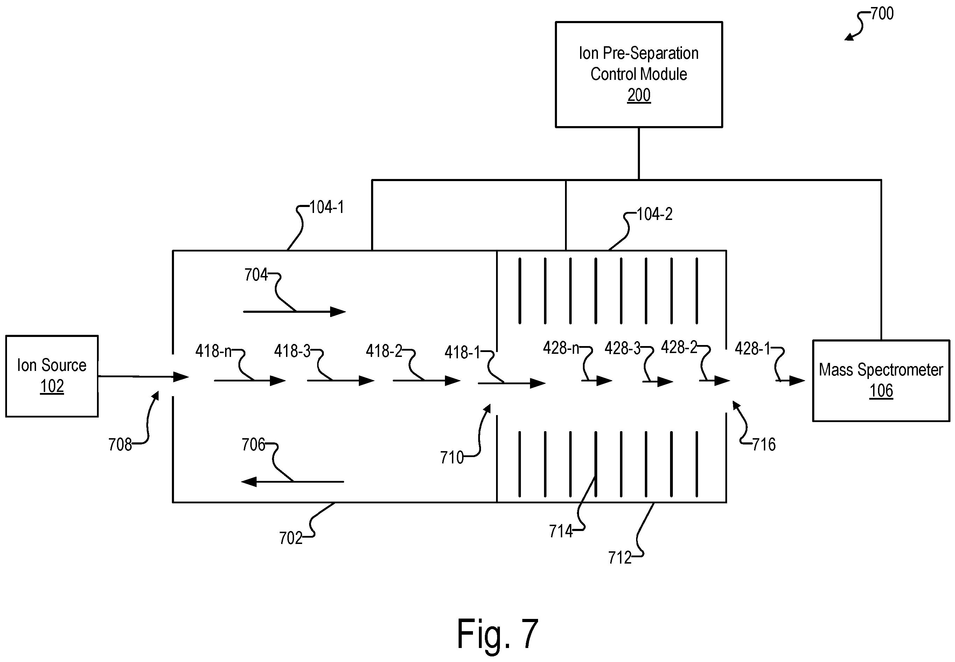

FIG. 7 shows another illustrative implementation 700 of system 100 in which precursor ions are continuously transported through first pre-separation device 104-1 and second pre-separation device 104-2. As shown, first pre-separation device 104-1 is positioned downstream of ion source 102 and includes a trapped ion mobility separator wherein precursor ions are spatially separated within a separation region 702 of first pre-separation device 104-1 based on a simultaneous acting flow of gas (shown by arrow 704) and a variable electric field gradient (shown by arrow 706) within separation region 702. The flow of gas is in a first direction from an inlet 708 at one end of separation region 702 to an outlet 710 at another end (e.g., the opposite end) of separation region 702. Additionally, the electrical field gradient is applied in a second direction (e.g., a direction opposite the first direction). Accordingly, the flow of gas transports precursor ions in the first direction against the second direction of the electric field gradient to spatially separate the precursor ions according to mobility of the precursor ions. The electric field gradient is varied to sequentially emit, over time, subsets 418 of precursor ions to second pre-separation device 104-2. To illustrate, the electric field gradient is steadily decreased to sequentially emit subsets 418 of precursor ions with increasing mobility.

Second pre-separation device 104-2 is positioned downstream of first pre-separation device 104-1 such that second pre-separation device is configured to receive the plurality of subsets 418 of precursor ions (e.g., through outlet 710). Second pre-separation device 104-2 includes a traveling wave m/z separation region 712 having a plurality of electrodes 714 arranged along region 712 and configured to receive voltages (e.g., DC and/or RF voltages) to generate a traveling wave potential. To illustrate, the voltages may include transient RF voltages applied to certain electrodes 714 so that potential wells are formed between these electrodes 714 to create trapping regions within region 712. The transient RF voltages are then progressively applied to subsequent electrodes 714 so that the trapping regions move along second pre-separation device 104-2, which may be referred to as a "traveling wave potential". An amplitude and/or frequency of the traveling wave potential may vary, such as based on a size of region 712.

The traveling wave potential accelerates precursor ions to move the precursor ions through second pre-separation device 104-2. The acceleration experienced by the precursor ions depends on m/z of the precursor ions. A position dependent DC gradient may also be applied to trap precursor ions of different m/z in different locations of second pre-separation device 104-2. Subsequently, precursor ions may be emitted from second pre-separation device 104-2 according to m/z by scanning of the DC gradient and/or by adjusting one or more parameters of the traveling wave potential. For example, the traveling wave potential provided by electrodes 714 may be varied such that precursor ions having various m/z ranges are sequentially emitted at outlet 716 of second pre-separation device 104-2 as packets 428 of precursor ions (e.g., each packet 428 of precursor ions has a different m/z range relative to other packets 428 of precursor ions).

As an illustrative example, as the precursor ions within first subset 418-1 of precursor ions travel through region 712, the traveling wave potential provided by electrodes 714 may be varied such as to order the first subset 418-1 of precursor ions in an m/z dependent manner (e.g., in the order of increasing and/or decreasing m/z values). To illustrate, the precursor ions, within first subset 418-1 of precursor ions, having a smaller m/z may be emitted as a first packet 428-1 of precursor ions while the precursor ions, within the first subset 418-1 of precursor ions, having a largest m/z may be emitted as another packet 428-n of precursor ions. Such pre-separation may be repeated for each subset 418 of precursor ions such that each subset 418 of precursor ions are further separated into a plurality of packets 428 of precursor ions that are sequentially emitted from second pre-separation device 104-2 based on the m/z of the precursor ions. As shown, packets 428 are continuously emitted from second pre-separation device to mass spectrometer 106 for acquiring mass spectra based on the plurality of packets 428.

Mass spectrometer 106 is positioned downstream of second pre-separation device 104-2 and is configured to receive the plurality of packets 428 of precursor ions emitted from second pre-separation device 104-2 and acquire mass spectra for the plurality of packets 428 of precursor ions. For example, a mass analyzer (e.g., mass analyzer 120) of mass spectrometer 106 generates a signal based on product ions produced from precursor ions included within each packet 428 of precursor ions ejected from second pre-separation device 104-2 at a variety of different m/z. The signal may include an electrical signal representative of ion intensities based on the precursor ions ejected from second pre-separation device 104-2 for each corresponding packet 428 of precursor ions. In some examples, control module 200 may be configured to direct mass spectrometer 106 to generate the signal and/or may obtain the signal generated by mass spectrometer 106.

Second pre-separation device 104-2 is synchronized with mass spectrometer 106 such that an m/z range of the precursor ions included in each packet 428 of precursor ions emitted from second pre-separation device 104-2 corresponds to a precursor m/z isolation window of mass spectrometer 106 (e.g., for each MS2 acquisition). To illustrate, precursor ions having an m/z range that are stable within the electric field gradient provided by rod electrodes 422 of second pre-separation device 104-2 correspond to an m/z range included in the precursor m/z isolation window of mass spectrometer 106. The precursor m/z isolation window of mass spectrometer 106 includes an m/z range of a mass filter (e.g., mass filter 116) of mass spectrometer 106 such that second pre-separation device 104-2 is synchronized with the mass filter. For example, the m/z range of the precursor ions included in each packet 428 of precursor ions emitted from second pre-separation device 104-2 corresponds to the m/z range of the precursor ions configured to travel through the mass filter. The electric field gradient provided by rod electrodes 422 may vary as the precursor m/z isolation window of mass spectrometer 106 varies to correspond to different m/z ranges (e.g., to acquire mass spectra for the plurality of packets 428 of precursor ions having different m/z ranges). The mass spectrometer may be further configured to fragment each isolated packet 428 of precursor ions within the precursor m/z isolation window (e.g., by way of collision cell 118) into product ions and acquire the mass spectra based on the product ions (e.g., by way of mass analyzer 120).

The systems and methods described herein may be applied to other types of instruments for hybridized pre-separation. For example, first pre-separation device 104-1 may implement any suitable technique for spatially separating precursor ions according to mobility, such as DMA separation, regular drift ion mobility separation, traveling wave ion mobility separation, trapped ion mobility separation, and the like. Additionally or alternatively, the second pre-separation device 104-2 may implement any suitable technique for separating precursor ions based on m/z, such as an RF stacked ring ion guide, a separation based on competition of pseudopotential resulting from a moving wave and a DC gradient, and the like. Such systems and techniques may be used for DDA and/or DIA MS analysis.

In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random-access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

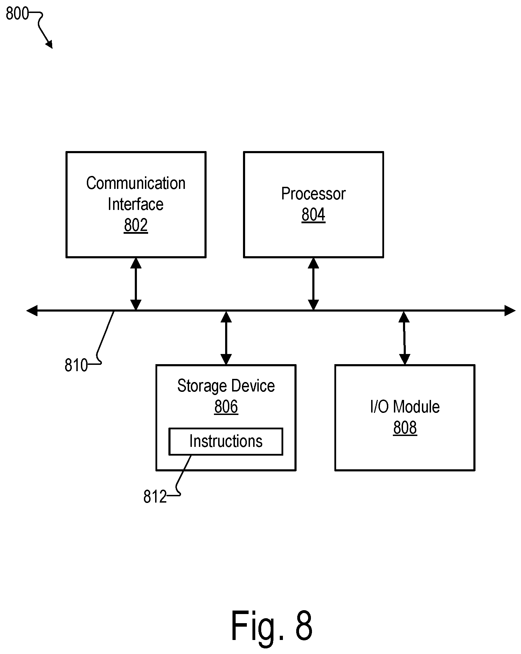

FIG. 8 shows an illustrative computing device 800 that may be specifically configured to perform one or more of the processes described herein. As shown in FIG. 8, computing device 800 may include a communication interface 802, a processor 804, a storage device 806, and an input/output ("I/O") module 808 communicatively connected one to another via a communication infrastructure 810. While an illustrative computing device 800 is shown in FIG. 8, the components illustrated in FIG. 8 are not intended to be limiting. Additional or alternative components may be used in other embodiments. Components of computing device 800 shown in FIG. 8 will now be described in additional detail.

Communication interface 802 may be configured to communicate with one or more computing devices. Examples of communication interface 802 include, without limitation, a wired network interface (such as a network interface card), a wireless network interface (such as a wireless network interface card), a modem, an audio/video connection, and any other suitable interface.

Processor 804 generally represents any type or form of processing unit capable of processing data and/or interpreting, executing, and/or directing execution of one or more of the instructions, processes, and/or operations described herein. Processor 804 may perform operations by executing computer-executable instructions 812 (e.g., an application, software, code, and/or other executable data instance) stored in storage device 806.

Storage device 806 may include one or more data storage media, devices, or configurations and may employ any type, form, and combination of data storage media and/or device. For example, storage device 806 may include, but is not limited to, any combination of the non-volatile media and/or volatile media described herein. Electronic data, including data described herein, may be temporarily and/or permanently stored in storage device 806. For example, data representative of computer-executable instructions 812 configured to direct processor 804 to perform any of the operations described herein may be stored within storage device 806. In some examples, data may be arranged in one or more databases residing within storage device 806.

I/O module 808 may include one or more I/O modules configured to receive user input and provide user output. One or more I/O modules may be used to receive input for a single virtual experience. I/O module 808 may include any hardware, firmware, software, or combination thereof supportive of input and output capabilities. For example, I/O module 808 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 808 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 808 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 800. For example, memory 202 may be implemented by storage device 806, and processor 204 may be implemented by processor 804.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Various embodiments of the systems, methods, and computer readable media taught herein may be described by one or more of the following clauses.

Clause 1. A system comprising: a first pre-separation device configured to spatially separate precursor ions into a plurality of subsets of precursor ions according to mobilities of the precursor ions and sequentially emit the plurality of subsets of precursor ions from the first pre-separation device; a second pre-separation device positioned downstream of the first pre-separation device, the second pre-separation device configured to receive the plurality of subsets of precursor ions emitted from the first pre-separation device and, for each subset of precursor ions, sequentially emit a plurality of packets of precursor ions from the second pre-separation device based on a mass-to-charge ratio (m/z) of the precursor ions; and a mass spectrometer positioned downstream of the second pre-separation device and configured to receive the plurality of packets of precursor ions from the second pre-separation device and acquire mass spectra for the plurality of packets of precursor ions; wherein the second pre-separation device is synchronized with the mass spectrometer such that an m/z range of the precursor ions included in each packet of precursor ions emitted from the second pre-separation device corresponds to a precursor m/z isolation window of the mass spectrometer.

Clause 2. The system of clause 1, wherein the first pre-separation device comprises a trapped ion mobility separator.

Clause 3. The system of clause 1, wherein the first pre-separation device comprises a drift ion mobility separator.

Clause 4. The system of clause 1, wherein the first pre-separation device comprises a differential mobility separator.

Clause 5. The system of any one of clauses 1-4, wherein the second pre-separation device comprises a linear ion trap including an end electrode configured to sequentially emit the plurality of packets of ions through an aperture of the end electrode.

Clause 6. The system of clause 5, wherein the end electrode is configured to selectively apply a blocking DC potential to the precursor ions to sequentially emit the plurality of packets of ions from the end electrode.

Clause 7. The system of any one of clauses 1-6, wherein the second pre-separation device comprises a mass filter, an ion accumulator, an ion sorter, or an annular ion trap.

Clause 8. The system of any one of clauses 1-7, further comprising a collector funnel positioned between the first pre-separation device and the second pre-separation device configured to guide the plurality of subsets of precursor ions from the first pre-separation device to the second pre-separation device.

Clause 9. The system of any one of clauses 1-8, wherein the first pre-separation device comprises a plurality of channels configured to store the plurality of subsets of precursor ions within the plurality of channels, wherein the first pre-separation device is configured to sequentially emit the plurality of subsets of precursor ions from the plurality of channels.

Clause 10. The system of clause 9, wherein each channel of the plurality of channels is configured to store a distinct subset of precursor ions included in the plurality of subsets of precursor ions.

Clause 11. The system of clause 10, wherein the first pre-separation device is configured to sequentially emit each distinct subset of precursor ions from the plurality of channels.

Clause 12. The system of any one of clauses 1-11, wherein the first pre-separation device is configured to continuously transport the precursor ions through the first pre-separation device to spatially separate the precursor ions into the plurality of subsets of precursor ions.

Clause 13. The system of any one of clauses 1-12, wherein the first pre-separation device is configured to emit the plurality of subsets of precursor ions and the second pre-separation device is configured to emit the plurality of packets of precursor ions according to a timing scheme.

Clause 14. The system of clause 13, wherein the timing scheme includes emitting an initial subset of precursor ions from the first pre-separation device and emitting the plurality of packets of precursor ions from the second pre-separation device based on the initial subset of precursor ions prior to emitting a next subset of precursor ions from the first pre-separation device.

Clause 15. The system of clause 13, wherein the timing scheme includes emitting an initial subset of precursor ions from the first pre-separation device and emitting the plurality of packets of precursor ions from the second pre-separation device based on the initial subset of precursor ions while a next subset of precursor ions is emitted from the first pre-separation device.

Clause 16. The system of any one of clauses 1-15, wherein the mass spectrometer comprises a mass filter configured to filter the plurality of packets of precursor ions based on the m/z of the precursor ions being within the precursor m/z isolation window, wherein the second pre-separation device is synchronized with the mass filter such that the m/z range of the precursor ions included in each packet of precursor ions emitted from the second pre-separation device corresponds to a precursor m/z isolation window of the mass filter.

Clause 17. The system of any one of clauses 1-16, wherein the mass spectrometer is configured to fragment the plurality of packets of precursor ions within the precursor m/z isolation window into product ions and acquire the mass spectra based on the product ions.

Clause 18. A system comprising: a first pre-separation device configured to spatially separate precursor ions into a plurality of subsets of precursor ions according to mobilities of the precursor ions and sequentially emit the plurality of subsets of precursor ions from the first pre-separation device; a second pre-separation device positioned downstream of the first pre-separation device, the second pre-separation device configured to receive the plurality of subsets of precursor ions emitted from the first pre-separation device and, for each subset of precursor ions, sequentially emit a plurality of packets of precursor ions from the second pre-separation device based on a mass-to-charge ratio (m/z) of the precursor ions; and a mass spectrometer positioned downstream of the second pre-separation device and configured to receive the plurality of packets of precursor ions from the second pre-separation device and acquire mass spectra for the plurality of packets of precursor ions, the mass spectrometer comprising a mass filter synchronized with the second pre-separation device such that an m/z range of the precursor ions included in each packet of precursor ions emitted from the second pre-separation device corresponds to a precursor m/z isolation window of the mass filter.

Clause 19. A system comprising: one or more processors; and memory storing executable instructions that, when executed by the one or more processors, cause a computing device to: direct a first pre-separation device to spatially separate precursor ions into a plurality of subsets of precursor ions according to mobilities of the precursor ions; direct the first pre-separation device to sequentially emit the plurality of subsets of precursor ions to a second pre-separation device; direct the second pre-separation device to sequentially emit, for each subset of precursor ions, a plurality of packets of precursor ions to a mass spectrometer based on a mass-to-charge ratio (m/z) of the precursor ions; and direct the mass spectrometer to acquire mass spectra for the plurality of packets of precursor ions; wherein the second pre-separation device is synchronized with the mass spectrometer such that an m/z range of the precursor ions included in each packet of precursor ions emitted from the second pre-separation device corresponds to a precursor m/z isolation window of the mass spectrometer.

Clause 20. The system of clause 19, wherein the first pre-separation device comprises a plurality of channels configured to store the plurality of subsets of precursor ions within the plurality of channels, wherein the directing the first pre-separation device to sequentially emit the plurality of subsets of precursor ions includes sequentially emitting the plurality of subsets of precursor ions from the plurality of channels.

Clause 21. The system of clause 20, wherein each channel of the plurality of channels is configured to store a distinct subset of precursor ions included in the plurality of subsets of precursor ions, wherein the directing the first pre-separation device to sequentially emit the plurality of subsets of precursor ions includes sequentially emitting each distinct subset of precursor ions from the plurality of channels.

Clause 22. The system of any one of clauses 19-21, wherein the directing the first pre-separation device to sequentially emit the plurality of subsets of precursor ions includes directing the first pre-separation device to continuously transport the precursor ions through the first pre-separation device to spatially separate the precursor ions into the plurality of subsets of precursor ions.

Clause 23. The system of any one of clauses 19-22, wherein the directing the first pre-separation device to sequentially emit the plurality of subsets of precursor ions includes directing the first pre-separation device to emit the plurality of packets of precursor ions according to a timing scheme.

Clause 24. The system of clause 23, wherein the timing scheme includes emitting an initial subset of precursor ions from the first pre-separation device and emitting the plurality of packets of precursor ions from the second pre-separation device based on the initial subset of precursor ions prior to emitting a next subset of precursor ions from the first pre-separation device.

Clause 25. The system of clause 23, wherein the timing scheme includes emitting an initial subset of precursor ions from the first pre-separation device and emitting the plurality of packets of precursor ions from the second pre-separation device based on the initial subset of precursor ions while a next subset of precursor ions is emitted from the first pre-separation device.

## Claims

1. A system comprising:
a first pre-separation device configured to spatially separate precursor ions into a plurality of subsets of precursor ions according to mobilities of the precursor ions and sequentially emit the plurality of subsets of precursor ions from the first pre-separation device;
a second pre-separation device positioned downstream of the first pre-separation device, the second pre-separation device configured to receive the plurality of subsets of precursor ions emitted from the first pre-separation device and, for each subset of precursor ions, sequentially emit a plurality of packets of precursor ions from the second pre-separation device based on a mass-to-charge ratio (m/z) of the precursor ions; and
a mass spectrometer positioned downstream of the second pre-separation device and configured to receive the plurality of packets of precursor ions from the second pre-separation device and acquire mass spectra for the plurality of packets of precursor ions;
wherein the second pre-separation device is synchronized with the mass spectrometer such that an m/z range of the precursor ions included in each packet of precursor ions emitted from the second pre-separation device corresponds to a precursor m/z isolation window of the mass spectrometer.

2. The system of claim 1, wherein the first pre-separation device comprises a trapped ion mobility separator, a drift ion mobility separator, or a differential mobility separator.

3. The system of any one of claims 1-2, wherein the second pre-separation device comprises a linear ion trap including an end electrode configured to sequentially emit the plurality of packets of ions through an aperture of the end electrode.

4. The system of claim 3, wherein the end electrode is configured to selectively apply a blocking DC potential to the precursor ions to sequentially emit the plurality of packets of ions from the end electrode.

5. The system of any one of claims 1-2, wherein the second pre-separation device comprises a mass filter, an ion accumulator, an ion sorter, or an annular ion trap.

6. The system of any one of claims 1-5, further comprising a collector funnel positioned between the first pre-separation device and the second pre-separation device configured to guide the plurality of subsets of precursor ions from the first pre-separation device to the second pre-separation device.

7. The system of any one of claims 1-6, wherein the first pre-separation device comprises a plurality of channels configured to store the plurality of subsets of precursor ions within the plurality of channels, wherein the first pre-separation device is configured to sequentially emit the plurality of subsets of precursor ions from the plurality of channels.

8. The system of claim 7, wherein each channel of the plurality of channels is configured to store a distinct subset of precursor ions included in the plurality of subsets of precursor ions.

9. The system of claim 8, wherein the first pre-separation device is configured to sequentially emit each distinct subset of precursor ions from the plurality of channels.

10. The system of any one of claims 1-9, wherein the first pre-separation device is configured to continuously transport the precursor ions through the first pre-separation device to spatially separate the precursor ions into the plurality of subsets of precursor ions.

11. The system of any one of claims 1-10, wherein the first pre-separation device is configured to emit the plurality of subsets of precursor ions and the second pre-separation device is configured to emit the plurality of packets of precursor ions according to a timing scheme.

12. The system of claim 11, wherein the timing scheme includes emitting an initial subset of precursor ions from the first pre-separation device and emitting the plurality of packets of precursor ions from the second pre-separation device based on the initial subset of precursor ions prior to emitting a next subset of precursor ions from the first pre-separation device.

13. The system of claim 11, wherein the timing scheme includes emitting an initial subset of precursor ions from the first pre-separation device and emitting the plurality of packets of precursor ions from the second pre-separation device based on the initial subset of precursor ions while a next subset of precursor ions is emitted from the first pre-separation device.

14. The system of any one of claims 1-13, wherein the mass spectrometer comprises a mass filter configured to filter the plurality of packets of precursor ions based on the m/z of the precursor ions being within the precursor m/z isolation window, wherein the second pre-separation device is synchronized with the mass filter such that the m/z range of the precursor ions included in each packet of precursor ions emitted from the second pre-separation device corresponds to a precursor m/z isolation window of the mass filter.

15. The system of any one of claims 1-14, wherein the mass spectrometer is configured to fragment the plurality of packets of precursor ions within the precursor m/z isolation window into product ions and acquire the mass spectra based on the product ions.
